(19) **Europäisches Patentamt**
**European Patent Office**
**Office européen des brevets**

(11) **EP 2 015 917 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**27.01.2016 Patentblatt 2016/04**

(45) Hinweis auf die Patenterteilung:
**21.08.2013 Patentblatt 2013/34**

(21) Anmeldenummer: **07728751.4**

(22) Anmeldetag: **03.05.2007**

(51) Int Cl.:
**B29C 45/27** *(2006.01)*     **B29C 45/73** *(2006.01)*

(86) Internationale Anmeldenummer:
**PCT/EP2007/054298**

(87) Internationale Veröffentlichungsnummer:
**WO 2007/128770 (15.11.2007 Gazette 2007/46)**

(54) **BODENEINSATZ MIT WÄRMEISOLATION**

BOTTOM INSERT WITH HEAT INSULATION

INSTALLATION AU SOL DOTÉE D'UNE ISOLATION THERMIQUE

(84) Benannte Vertragsstaaten:
**AT CH DE IT LI LU**

(30) Priorität: **06.05.2006 DE 102006021229**

(43) Veröffentlichungstag der Anmeldung:
**21.01.2009 Patentblatt 2009/04**

(73) Patentinhaber: **MHT Mold & Hotrunner Technology AG**
**65239 Hochheim (DE)**

(72) Erfinder:
• **SCHWEININGER, Stefan**
**65197 Wiesbaden (DE)**
• **THÖMMES, Helmut**
**54441 Kastel (DE)**
• **NETER, Witold**
**Newnan, Georgia 30265 (US)**

(74) Vertreter: **WSL Patentanwälte Partnerschaft mbB**
**Kaiser-Friedrich-Ring 98**
**65185 Wiesbaden (DE)**

(56) Entgegenhaltungen:

| | |
|---|---|
| **EP-A- 0 241 040** | **WO-A-03/086734** |
| **WO-A-2006/047429** | **WO-A1-95/05930** |
| **WO-A1-03/080315** | **DE-A1- 4 035 194** |
| **GB-A- 1 220 607** | **JP-A- 57 024 220** |
| **JP-A- S54 116 565** | **US-A- 5 922 367** |
| **US-A1- 2003 155 674** | **US-A1- 2004 191 354** |
| **US-B1- 6 220 850** | **US-B1- 6 220 850** |
| **US-B1- 6 569 370** | **US-B2- 7 104 782** |

• **KUCHLING H.: 'Taschenbuch der Physik', Bd. 3. AUFL., 1981, VERLAG HARRI DEUTSCH, FRANKFURT Seiten 12-13 - 256-259**

**Beschreibung**

Die vorliegende Erfindung betrifft einen Bodeneinsatz für einen Formnest für die Herstellung von Formlingen aus Kunststoff bestehend aus einem Grundkörper mit einer heißen Seite, die eine Vertiefung zur Aufnahme von geschmolzenem, unter Druck stehendem Kunststoff aufweist, und einer kalten Seite mit einer Vertiefung, deren Innenkontur dafür vorgesehen ist, mit dem herzustellenden Formling in Kontakt zu treten und dessen Außenkontur zu formen, sowie einer Pforte, welche die Vertiefung der heißen Seite mit der Vertiefung der kalten Seite verbindet und dafür vorgesehen ist, geschmolzenen Kunststoff von der heißen Seite in die kalte Seite einzubringen.

Ein Formnest mit solch einem Bodeneinsatz ist beispielsweise aus der DE 100 24 625 bekannt und in Figur 1 gezeigt.

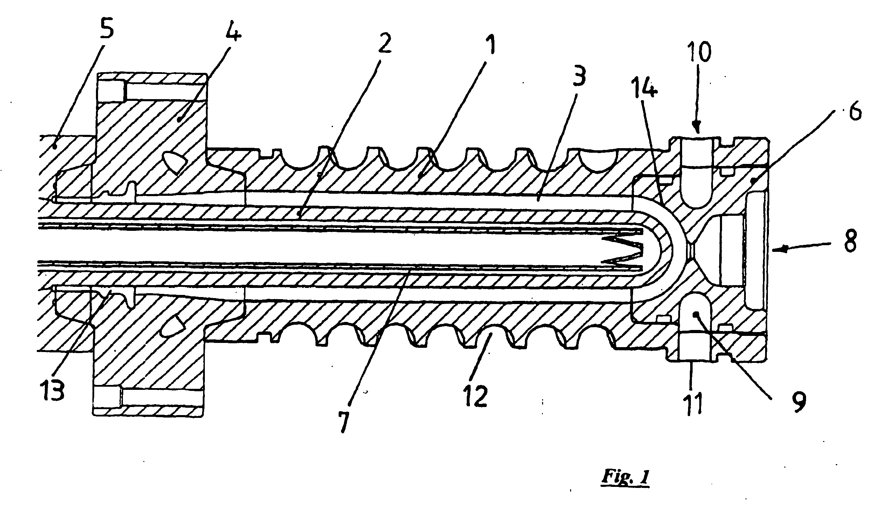

Das Formnest kommt im wesentlichen im Spritzgießverfahren zum Einsatz. Beim Spritzgießen wird die pulverförmige oder granulierte Formmasse, z. B. in einer Schneckenspritzgießmaschine, plastifiziert und dann beispielsweise durch axiale Verschiebung der Schnecke durch den Spritzkanal in das geschlossene, im allgemeinen gekühlte Werkzeug, z. B. ein Formnest, wie es in Figur 1 gezeigt ist, gedrückt.

Hat sich die Form bzw. der darin vorgesehene Formraum mit der Schmelze gefüllt, so erstarrt diese durch Abkühlung. Schließlich wird das Werkzeug bzw. das Formnest geöffnet und das fertige Formteil entformt und ausgestoßen. Das Werkzeug kann wieder geschlossen werden und ein neuer Arbeitszyklus kann mit dem erneuten Einspritzen beginnen.

Mit Hilfe des Spritzgusses ist es überdies möglich, Hohlkörper herzustellen, die in einem späteren Arbeitsschritt z. B. zu Flaschen oder Kanistern aufgeblasen werden. Diese Hohlkörper werden auch als Vorformlinge bzw. Preforms bezeichnet. Das in Figur 1 gezeigte, aus dem Stand der Technik bekannte Formnest ist für die Herstellung von solchen Preforms vorgesehen. Das Formnest besteht hier aus der Kavität 1, dem Kern 2, dem Halsring 4, dem Stützring 5 sowie dem Bodeneinsatz 6. Im zusammengesetzten Zustand, der in Figur 1 gezeigt ist, wird der Formraum von diesen Teilen umgeben bzw. gebildet. Die mehrteilige Ausführung des Formnests dient u.a. der leichten Entformbarkeit des fertigen Werkstücks sowie der einfachen Herstellung des Formnests selbst. Die Kunststofformmasse wird in einer geeigneten Plastifiziervorrichtung (nicht gezeigt) plastifiziert und homogenisiert und durch die Öffnung 8 in den Formraum 3 gegeben. Nach der Abkühlung der Formmasse kann das Formteil entformt werden und in einem weiteren Arbeitsschritt am Gewinde 13 bzw. an dem Transportring unterhalb des Gewindes gehalten und zu einer Flasche oder einem Kanister aufgeblasen werden.

Um eine möglichst schnelle Abkühlung der Formmasse zu erreichen und dadurch die Zykluszeit zu verringern, wird das Formnest im allgemeinen gekühlt.

Dazu sind beispielsweise an der Kavität 1 außen umlaufende Kühlnuten 12 angebracht. Im Betrieb wird die Kavität daher koaxial von einem weiteren Werkzeugteil oder von mehreren Werkzeugteilen umfaßt, so daß die Kühlnuten 12 mit dem umfassenden Werkzeugteil Kühlkanäle bilden. Innerhalb des Kerns 2 ist ein Zuführkanal 7 angeordnet, durch den Kühlwasser in den Kern geleitet werden kann, das innerhalb des Kanals in der Figur 1 von links nach rechts strömt und dann zwischen der Wand des Kanals 7 und der Innenwand des Kerns 2 von rechts nach links zurückgeleitet wird. Wie in der Abbildung zu erkennen, verjüngt sich der Formraum 3 in der Nähe des Bodeneinsatzes 6. Die sich verjüngende Kontur des Formraums, die von dem Bodeneinsatz 6 gebildet wird, trägt in Figur 1 die Bezugszahl 14.

Um hier eine effektive Kühlung zu erreichen, weist der Bodeneinsatz 6 eine umlaufende Kühlnut 9 auf. Die Kavität 1 weist eine Einfüllöffnung 10 und eine Ablaßöffnung 11 für die Wasserkühlung des Bodeneinsatzes 6 auf.

Meist erfolgt die Zuführung der Kunststoffschmelze über eine mit einem Nadelventil betätigte Düse, die sich durch die Öffnung 8 des Bodeneinsatzes in die Vertiefung der heißen Seite hineinerstreckt und deren Auslaß unmittelbar vor der Öffnung bzw. Pforte des Bodeneinsatzes endet. Der Bodeneinsatz stellt die Schnittstelle zwischen der sogenannten heißen Seite des gesamten Werkzeuges und der sogenannten kalten Seite des gesamten Werkzeuges dar, so daß der Bodeneinsatz selbst eine heiße Seite, die in Figur 1 rechts gezeigt ist und eine kalte Seite, die in Figur 1 links gezeigt ist, aufweist. In der heißen Seite des Werkzeuges sowie des Bodeneinsatzes wird die Kunststoffschmelze unter hohem Druck bereitgestellt. Hier ist es wesentlich, daß die Schmelze einschließlich des Nadelventils eine Arbeitstemperatur von etwa 280 bis 285 °C aufweist. Wird das Nadelventil geöffnet, so wird die Kunststoffschmelze durch die Düse in den Formraum 3 eingebracht. Der Formraum 3 bzw. alle daran angrenzenden Flächen, d. h. auch die Innenwand 14 des Bodeneinsatzes muß so gut wie möglich gekühlt werden, so daß die Schmelze sehr schnell erstarren und der Vorformling entnommen werden kann. Der Bodeneinsatz 6 muß daher einerseits extrem gut gekühlt werden und darf aber andererseits an seiner heißen Seite die Funktion des Nadelventils nicht beeinträchtigen, d.h. das Nadelventil muß auf der Arbeitstemperatur bleiben. Dies hat zur Folge, daß die Düsenspitze einen zusätzlichen Heizer benötigt, so daß innerhalb des Bodeneinsatzes 6 häufig sowohl ein Heizer als auch Kühlkanäle angeordnet sind, die in der Regel gleichzeitig verwendet werden. Dadurch ist ein schnelles Abkühlen des Vorformlings Im Formnest nur begrenzt möglich.

Dokument DE 100 37 739 schlägt vor, zwischen der Düse und dem Bodeneinsatz ein Wärmedämmelement aus wärmeisollerendem Kunststoff anzuordnen. Dies kann zwar den Wärmefluß zwischen Düsenspitze einerseits und kalter Seite andererseits verringern, ändert jedoch wenig daran, daß sich innerhalb des Bodeneinsatzes ein erheblicher Temperaturgradient ausbildet und daher von der heißen zur kalten Seite eine große Wärmemenge abfließt, die durch eine zusätzliche Kühlleistung abgeführt werden muß.

Die JP 57 024220 A zeigt ebenfalls einen Bodeneinsatz für ein Formnest.

Ausgehend von diesem Stand der Technik ist es daher Aufgabe der vorliegenden Ereindung, einen Bodeneinsatz zur Verfügung zu stellen, der ein schnelleres Abkühlen des Vorformlings im Formraum 3 ermöglicht.

Erfindungsgemäß wird diese Aufgabe durch einen Bodeneinsatz mit allen Merkmalen von Anspruch 1 oder Anspruch 2 gelöst.

In einer ersten bevorzugten Ausführungsform ist der Einschnitt derart ausgebildet, daß durch das Einbringen des Einschnitts die Wärmedurchtrittsfläche, d.h. die Fläche senkrecht zum Wärmefluß im Bereich des Einschnittes reduziert wird und zwar vorzugsweise um mindestens 30 % und besonders bevorzugt um mindestens 50 % und ganz besonders bevorzugt um mindestens 75 %. Der Hauptwärmefluß von der heißen zu der kalten Seite erfolgt über den Grundkörper des Bodeneinsatzes, der im allgemeinen aus einem metallischen Werkstoff gefertigt ist. Durch den erfindungsgemäßen Einschnitt wird an der Stelle des Einschnittes die Wärmedurchtrittsfläche verringert, so daß dadurch auch die Größe des Wärmeflusses erheblich reduziert wird.

Dieser Maßnahme liegt die Überlegung zugrunde, daß der Hauptteil der Wärmeübertragung von der heißen zur kalten Seite des Bodeneinsatzes mittels Wärmeleitung erfolgt Die Wärmemenge, die durch Wärmeleitung übertragen wird, berechnet sich nach dem Fourierschen Gesetz zu:

$$\dot{Q} = \frac{\lambda \cdot A \cdot \Delta T}{L}$$

wobei Q̇ die transportierte Wärmemenge pro Zeiteinheit ist, A die Fläche senkrecht zum Wärmefluß, L die Dicke des Körpers, durch den Wärme fließt, λ die Wärmeleitfähigkeit des Materials und $\Delta T$ die Temperaturdifferenz zwischen der kalten und der heißen Seite ist.

Der Einschnitt führt daher zu einer Reduzierung der Fläche A und damit zu einer Reduktion des Wärmetransports.

Der Einschnitt ist in etwa in dem die Pforte umgebenden Bereich eingebracht und derart angeordnet, daß er die Vertiefung der heißen Seite an einem Abschnitt in der Nähe der Pforte umgibt. Mit anderen Worten ist der Einschnitt nicht direkt an der Pforte angeordnet, sondern ein wenig in Richtung der Vertiefung der heißen Seite verschoben. Der Grund hierfür ist, daß die formgebende Kontur des Bodeneinsatzes sich im allgemeinen bis zur Pforte erstreckt und es für eine effiziente und schnelle Abkühlung des Vorformlings notwendig ist, alle formgebenden Oberflächen möglichst effektiv zu kühlen. Der Einschnitt besteht gemäß Anspruch 1 und in einer bevorzugten Ausführungsform gemäß Anspruch 4 aus einer im wesentlichen umlaufenden Nut im Grundkörper, wobei die Nut eine Tiefe hat, die gemäß Anspruch 1 mindestens dreimal so groß ist, wie die Breite der Nut, und gemäß Anspruch 4 vorzugsweise mindestens zweimal so groß und besonders bevorzugt mindestens dreimal so groß ist, wie die Breite der Nut. Grundsätzlich sollte die Nut möglichst tief ausgeführt werden, da es am wirkungsvollsten ist, wenn die Wärmedurchtrittsfläche möglichst reduziert wird.

Der Einschnitt kann zumindest teilweise mit einem wärmedämmenden Material ausgefüllt sein. Grundsätzlich reicht es jedoch völlig aus, den Einschnitt einfach mit Luft zu füllen. Selbstverständlich darf er nicht mit Kühlwasser beaufschlagt werden, da dann der Einschnitt seine wärmedämmende Funktion verlieren würde.

In einer anderen bevorzugten Ausführungsform ist vorgesehen, daß der Bodeneinsatz zweiteilig ausgebildet ist und zwar einem heißen Teil, das die Vertiefung der heißen Seite aufweist und einem kalten Teil, das die Vertiefung der kalten Seite aufweist. Durch die Verwendung von zwei getrennten Teilen kommt es automatisch zu einem verringerten Wärmefluß zwischen dem einen und dem anderen Teil. Darüber hinaus hat die zweiteilige Lösung den Vorteil, daß die beiden Teile zu Zwecken der Wartung bzw. Reinigung auseinandergenommen werden können.

Mit Vorteil ist das heiße Teil derart ausgebildet, daß es eine der Vertiefung der heißen Seite gegenüberliegenden Ausnehmung zur Aufnahme des kalten Teils aufweist. Das kalte Teil des Bodeneinsatzes wird somit in die entsprechende Vertiefung des heißen Teils eingesetzt. Die Abdichtung des kalten Teils gegenüber dem heißen Teil kann vorzugsweise mit Hilfe von O-Ringen erfolgen.

Es ist besonders bevorzugt, wenn alle Flächen, die für den Kontakt mit dem herzustellenden Formling vorgesehen sind, an dem kalten Teil angeordnet sind. Es ist daher möglich, das kalte Teil bei einer relativ niedrigen Temperatur zu halten, während das heiße Teil bei einer sehr hohen Temperatur, beispielsweise bei etwa 280 °C, gehalten wird, ohne daß der Wärmeverlust sehr groß wird.

Weiterhin kann es von Vorteil sein, daß an der Kontaktfläche zwischen heißem und kaltem Teil eine auf mindestens einem Teil aufgebrachte Isolationsbeschichtung, eine Isolationsmembran und/oder ein Abstandselement vorgesehen ist. Durch diese Maßnahme kann die Wärmeübertragung zwischen kaltem und heißem Teil weiter reduziert werden.

Gemäß Anspruch 2 weist der Bodeneinsatz einem Kühlkanal zur Zu- und Abführung eines Kühlfluids zu und von der kalten Seite auf. Die Ausführungsform gemäß Anspruch 1 kann einen solchen Kühlkanal aufweisen.

Mit Vorteil sind kaltes und heißes Teil des Bodeneinsatzes derart ausgebildet, daß beim Einsetzen des kalten Teils in die Ausnehmung des heißen Teils zumindest abschnittsweise zwischen kaltem Teil und heißem Teil ein Kühlraum zur Aufnahme von Kühlfluid verbleibt, wobei der Kühlraum vorzugsweise teilringförmig und besonders bevorzugt im wesentlichen ringförmig ausgebildet ist. Dadurch ist gewährleistet, daß das Kühlwasser das kalte Teil umströmt und damit sehr effektiv kühlt.

Darüber hinaus ist mit Vorteil der ringförmige Raum derart ausgebildet, daß die den ringförmigen Raum begrenzende Fläche an dem kalten Teil im wesentlichen parallel zur mit dem Formling in Kontakt tretenden Innenfläche der Vertiefung des kalten Teils verläuft. Dadurch ist eine sehr effiziente Kühlung des kalten Teils mit Kühlfluid möglich, da der ringförmige Raum der Kontur der zu kühlenden Innenfläche der Vertiefung der kalten Seite folgt.

Die Wandstärke des kalten Teils im Bereich des ringförmigen Raums kann weiter reduziert werden, wenn das kalte Teil im Bereich des ringförmigen Raums Verstärkungselemente, z.B. Verstärkungsrippen, aufweist. Prinzipiell ist es wünschenswert den ringförmigen Raum möglichst nahe an die Innenfläche des kalten Teils zu bringen, die mit dem zu kühlenden Vorformling in Kontakt tritt, da dadurch der Vorformling sehr schnell abgekühlt werden kann. Allerdings kann die Wandstärke nicht zu gering gewählt werden, da dann die Stabilität des kalten Teils gefährdet wird. Mit Hilfe der Verstärkungsrippen kann die Stabilität des kalten Teils bei noch geringerer Wahl der Wandstärke gewährleistet werden.

Weitere Vorteile, Merkmale und Anwendungsmöglichkeiten der vorliegenden Erfindung werden deutlich anhand der folgenden Beschreibung einer bevorzugten Ausführungsform und der zugehörigen Figuren. Es zeigen:

Figur 1    ein Formnest des Standes der Technik,

Figur 2    eine erfindungsgemäße Ausführungsform des Bodeneinsatzes, wobei die beiden Teile des Bodeneinsatzes getrennt dargestellt sind, und

Figur 3    die zweiteilige Ausführungsform des Bodeneinsatzes von Figur 2, wobei der Bodeneinsatz im zusammengesetzten Zustand dargestellt ist.

Figur 1 zeigt das bereits ausführlich erläuterte Formnest des Standes der Technik.

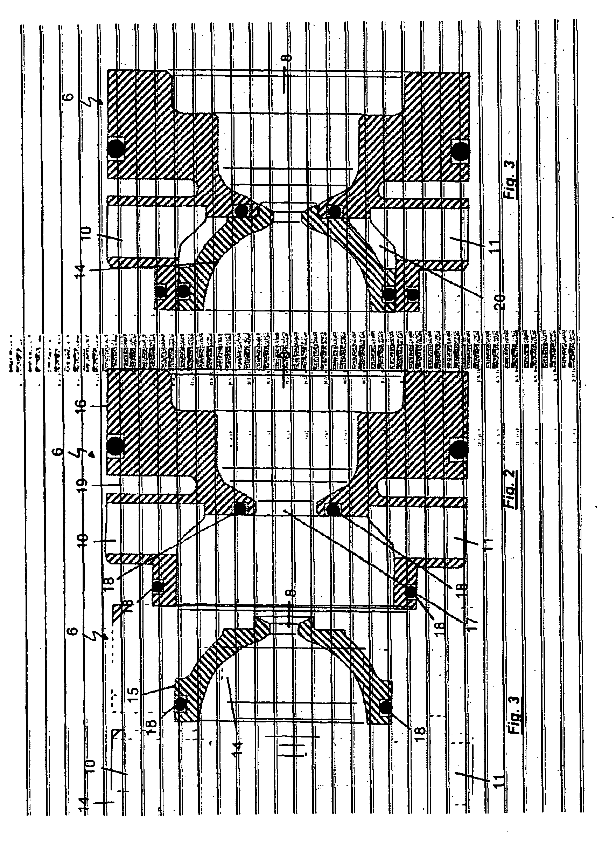

In Figur 2 ist eine erfindungsgemäße Ausführungsform des Bodeneinsatzes 6 gezeigt. Der Bodeneinsatz 6 besteht aus zwei Teilen, nämlich dem kalten Teil 15 und dem heißen Teil 16.

Der Bodeneinsatz 6 weist an seiner heißen Seite eine Öffnung bzw. Vertiefung 8 auf, die der Zuführung der Kunststoffschmelze dient. In dieser Ausnehmung wird die entsprechende Düse, die mittels eines Nadelventils geöffnet oder verschlossen werden kann, eingesetzt. Die Düsenspitze muß eine Arbeitstemperatur haben, die oberhalb der Schmelztemperatur der Kunststoffschmelze liegt.

Das kalte Teil 15 weist ebenfalls eine Ausnehmung auf, dessen Innenwände im Betrieb mit der Außenwand des herzustellenden Vorformlings in Kontakt treten. Das kalte Teil 15 muß gekühlt werden, um für ein schnelles Erstarren der in den Formraum eingebrachten Schmelze zu sorgen. Folglich ist der Temperaturgradient von der in den Figuren 2 und 3 rechts dargestellten heißen Seite zu der in den Figuren 2 und 3 links dargestellten kalten Seite extrem hoch.

Da der Grundkörper des Bodeneinsatzes 6 aus einem metallischen Werkstoff hergestellt ist, ist der Wärmefluß innerhalb des Bodeneinsatzes erheblich. Daher wird erfindungsgemäß vorgeschlagen, daß zwischen der heißen Seite und der kalten Seite Mittel zur Wärmedämmung vorgesehen sind.

So ist beispielsweise, wie in den Figuren 2 und 3 deutlich zu erkennen ist, in den Grundkörper des Bodeneinsatzes 6 eine ringförmige Nut 19 eingebracht worden. Diese ringförmige Nut 19 sorgt dafür, daß der effektive Materialquerschnitt, d.h. die Wärmedurchtrittsfläche, von der heißen Seite (in den Figuren 2 und 3 rechts gezeigt) zu der kalten Seite (in den Figuren 2 und 3 links gezeigt) deutlich reduziert wird.

Da das Material des Grundkörpers des Bodeneinsatzes 6 metallisch ist, findet der wesentliche Wärmeübertrag durch die metallische Wärmeleitung innerhalb des Grundkörpers statt. Die einfachste Methode, um den Wärmefluß von der heißen in Richtung der kalten Seite zu reduzieren ist daher, den Materialquerschnitt bzw. die effektive Fläche, über die der Wärmeübertrag stattfinden kann, zu reduzieren. Es kommt daher weniger auf die Breite der Nut 19 an, sondern primär auf die Tiefe der Nut. Je geringer der verbleibende Materialquerschnitt bzw. die verbleibende Materialquerschnittsfläche ist, um so geringer ist die Wärmeübertragung zwischen heißer Seite einerseits und kalter Seite andererseits. Natürlich ist bei der Wahl des Einschnitts 19 zu berücksichtigen, daß der Bodeneinsatz eine Stabilität beibehalten muß, daher kann die Nut 19 nicht beliebig tief gewählt werden.

Der durch das Einbringen der ringförmigen Nut 19 verbleibende Spalt kann entweder einfach mit Luft gefüllt bleiben, da im allgemeinen der Wärmeübertrag durch die in dem Spalt verbleibenden Luftmoleküle gegenüber dem Wärmeübertrag über die metallische Wärmeleitung vernachlässigbar ist, oder er kann mit einem wärmedämmenden Material ausgefüllt werden. Es versteht sich, daß die ringförmige Nut 19 nicht mit Kühlwasser beaufschlagt werden darf, da sonst lediglich die Trennfläche zwischen der heißen und der kalten Seite verschoben werden würde, jedoch der Wärmeübertrag nicht reduziert werden würde.

Weiterhin ist in den Figuren 2 und 3 zu sehen, daß der Bodeneinsatz 6 aus zwei getrennten Teilen 15 und 16 besteht. Auch dies führt zu einer Reduzierung des Wärmeübertrags zwischen heißer Seite und kalter Seite. Die Abdichtung des kalten Teils 15 gegenüber dem heißen Teil 16 erfolgt mittels O-Ringen 18. Zu Reinigungs- bzw. Wartungszwecken kann zudem das kalte Teil 15 aus dem heißen Teil 16 entnommen werden. Darüber hinaus ist es, für den Fall, daß die Außenkontur des herzustellenden Vorformlings verändert werden soll, lediglich notwendig, das kalte Teil 15 neu zu gestalten. Das heiße Teil 16 des Bodeneinsatzes kann unverändert bestehen bleiben. Dies reduziert zudem die Umrüstkosten im Falle eines Wechsels des Preform-Designs.

Wie insbesondere in Figur 3, die den zusammengesetzten Bodeneinsatz zeigt, zu sehen ist, bildet sich beim Einsetzen des kalten Teils 15 in das heiße Teil 16 zwischen der Außenfläche des kalten Teils 15 und der Innenfläche der Vertiefung des heißen Teils 16 ein ringförmiger Raum 20. Wird nun Kühlfluid, z. B. Kühlwasser über den Zulauf 10 in den Bodeneinsatz eingeführt, so umströmt das Kühlwasser das kalte Teil 15 und verläßt über den Auslaß 11 den Bodeneinsatz wieder. Durch diese Gestaltung kann die mit dem Vorformling in Kontakt tretende Innenkontur der Vertiefung der kalten Seite effektiv gekühlt werden.

Durch die Anordnung der Wärmeisolation zwischen Kühlkanal einerseits und der heißen Seite des Bodeneinsatzes andererseits wird der Wärmeübertrag von der heißen Seite zu der kalten Seite deutlich reduziert, so daß weniger Wärme über die Kühlkanäle abgeführt werden muß und sich somit eine deutlich verbesserte Kühlwirkung einstellt.

## Bezugszeichenliste

1    Kavität
2    Kern
3    Formraum
4    Halsring
5    Stützring
6    Bodeneinsatz
7    Zuführkanal
8    Vertiefung
9    Kühlnut
10   Zulauf
11   Auslaß
12   umlaufende Kühlnuten
13   Gewinde
14   Kontur des Formraums
15   kaltes Teil
16   heißes Teil
17   Pforte
18   O-Ringe
19   Einschnitt
20   ringförmiger Raum

## Patentansprüche

1. Bodeneinsatz für ein Formnest für die Herstellung von Formlingen aus Kunststoff bestehend aus einem Grundkörper mit einer heißen Seite, die eine Vertiefung zur Aufnahme von geschmolzenem, unter Druck stehendem Kunststoff aufweist, und einer kalten Seite mit einer Vertiefung, deren Innenkontur dafür vorgesehen ist, mit dem herzustellenden Formling in Kontakt zu treten und dessen Außenkontur zu formen, sowie einer Pforte (17), welche die Vertiefung der heißen Seite mit der Vertiefung der kalten Seite verbindet und dafür vorgesehen ist, geschmolzenen Kunststoff von der heißen Seite in die kalte Seite einzubringen, **dadurch gekennzeichnet, daß** eine Einrichtung zur Wärmedämmung, die aus einem in den Grundkörper eingebrachten Einschnitt (19) besteht, innerhalb des Bodeneinsatzes zwischen der heißen Seite und der kalten Seite des Bodeneinsatzes vorgesehen ist, wobei der Einschnitt (19) so angeordnet ist, daß er die Vertiefung der heißen Seite an einem Abschnitt in der Nähe der Pforte umgibt und wobei der Einschnitt (19) aus einer im wesentlichen umlaufenden Nut im Grundkörper besteht, wobei die Nut eine Tiefe hat, die mindestens dreimal so groß ist wie die Breite der Nut.

2. Bodeneinsatz für ein Formnest für die Herstellung von Formlingen aus Kunststoff bestehend aus einem Grundkörper mit einer heißen Seite, die eine Vertiefung zur Aufnahme von geschmolzenem, unter Druck stehendem Kunststoff aufweist, und einer kalten Seite mit einer Vertiefung, deren Innenkontur dafür vorgesehen ist, mit dem herzustellenden Formling in Kontakt zu treten und dessen Außenkontur zu formen, sowie einer Pforte (17), welche die Vertiefung der heißen Seite mit der Vertiefung der kalten Seite verbindet und dafür vorgesehen ist, geschmolzenen Kunststoff von der heißen Seite in die kalte Seite einzubringen, wobei ein Kühlkanal zur Zu- und Abführung eines Kühlfluids zu und von der kalten Seite vorgesehen ist, **dadurch gekennzeichnet, daß** eine Einrichtung zur Wärmedämmung, die aus einem in den Grundkörper eingebrachten Einschnitt (19) besteht, innerhalb des Bodeneinsatzes zwischen der heißen Seite und der kalten Seite des Bodeneinsatzes vorgesehen ist, wobei der Einschnitt (19) so angeordnet ist, daß er die Vertiefung der heißen Seite an einem Abschnitt in der Nähe der Pforte umgibt.

3. Bodeneinsatz nach nach Anspruch 1 oder 2, **dadurch gekennzeichnet, daß** der Einschnitt (19) derart ausgebildet ist, daß durch das Einbringen des Einschnitts (19) die Wärmedurchtrittsfläche, d.h. die Fläche senkrecht zum Wärmefluß von der heißen zu der kalten Seite, im Bereich des Einschnittes (19) reduziert wird und zwar vorzugsweise um mindestens 30% und besonders bevorzugt um mindestens 50% und ganz besonders bevorzugt um mindestens 75%.

4. Bodeneinsatz nach Anspruch 2 oder 3, **dadurch gekennzeichnet, daß** der Einschnitt (19) aus einer im wesentlichen umlaufenden Nut im Grundkörper besteht, wobei die Nut eine Tiefe hat, die vorzugsweise mindestens zweimal und besonders bevorzugt mindestens dreimal so groß ist wie die Breite der Nut.

5. Bodeneinsatz nach einem der Ansprüche 1 bis 4, **dadurch gekennzeichnet, daß** der Einschnitt (19) zumindest teilweise mit einem wärmedämmenden Material ausgefüllt ist.

6. Bodeneinsatz nach einem der Ansprüche 1 bis 5, **dadurch gekennzeichnet, daß** der Bodeneinsatz zweiteilig ausgebildet ist, und zwar mit einem heißen Teil (16), das die Vertiefung der heißen Seite aufweist, und einem kalten Teil (15), das die Vertiefung der kalten Seite aufweist.

7. Bodeneinsatz nach Anspruch 6, **dadurch gekennzeichnet, daß** die beiden Teile des Bodeneinsatzes (7) trennbar sind.

8. Bodeneinsatz nach Anspruch 6 oder 7, **dadurch gekennzeichnet, daß** das heiße Teil eine der Vertiefung der heißen Seite gegenüberliegende Ausnehmung zur Aufnahme des kalten Teils aufweist.

9. Bodeneinsatz nach einem der Ansprüche 6 bis 8, **dadurch gekennzeichnet, daß** das kalte Teil und das heiße Teil gegeneinander abgedichtet sind und zwar vorzugsweise mit Hilfe von O-Ringen (18).

10. Bodeneinsatz nach einem der Ansprüche 6 bis 9, **dadurch gekennzeichnet, daß** alle Flächen, die für den Kontakt mit dem herzustellenden Formling vorgesehen sind, an dem kalten Teil angeordnet sind.

11. Bodeneinsatz nach einem der Ansprüche 6 bis 10, **dadurch gekennzeichnet, daß** an der Kontaktfläche zwischen heißem und kalten Teil eine auf mindestens einem Teil aufgebrachte Isolationsbeschichtung, eine Isolationsmembran und/oder ein Abstandselement vorgesehen ist.

12. Bodeneinsatz nach einem der Ansprüche 1, 3 bis 11, **dadurch gekennzeichnet, daß** ein Kühlkanal zur Zu- und Abführung eines Kühlfluids zu und von der kalten Seite vorgesehen ist.

13. Bodeneinsatz nach Anspruch 12, soweit von einem der Ansprüche 8 bis 11 abhängig, **dadurch gekennzeichnet, daß** beim Einsetzen des kalten Teils in die Ausnehmung des heißen Teils zumindest abschnittsweise zwischen kaltem Teil und heißem Teil ein Kühlraum zur Aufnahme von Kühlfluid verbleibt, wobei der Kühlraum vorzugsweise teilringförmig und besonders bevorzugt im wesentlichen ringförmig ausgebildet ist.

14. Bodeneinsatz nach Anspruch 13, **dadurch gekennzeichnet, daß** die den Kühlraum begrenzende Fläche an dem kalten Teil im wesentlichen parallel zur mit dem herzustellenden Formling in Kontakt tretenden Innenfläche der Vertiefung des kalten Teils verläuft und/oder daß das kalte Teil im Bereich des Kühlraums Verstärkungselemente, vorzugsweise Verstärkungsrippen, aufweist.

**Claims**

1. A bottom insert for a mold cavity for the production of moldings of plastic material comprising a main body with a hot side which has a recess for receiving molten plastic material under pressure and a cold side having a recess, the inside contour of which is intended to come into contact with the molding to be produced and to shape the outside contour thereof, and a gate (17) which connects the recess of the hot side to the recess of the cold side and is intended to introduce molten plastic material from the hot side into the cold side, **characterized in that** there is provided a device for thermal insulation within the bottom insert between the hot side and the cold side of the bottom insert, which consists of a slot (19) inserted into the main body, wherein the slot (19) is so arranged that is surrounds the recess of the hot side at a portion in the proximity of the gate, and wherein the slot (19) comprises a substantially peripherally extending groove in the main body, wherein the groove is of a depth which is at least three times as large as the width of the groove.

2. A bottom insert for a mold cavity for the production of moldings of plastic material comprising a main body with a hot side which has a recess for receiving molten plastic material under pressure and a cold side having a recess, the inside contour of which is intended to come into contact with the molding to be produced and to shape the outside contour thereof, and a gate (17) which connects the recess of the hot side to the recess of the cold side and is intended to introduce molten plastic material from the hot side into the cold side, **characterized in that** there is provided a device for thermal insulation within the bottom insert between the hot side and the cold side of the bottom insert, which consists of a slot (19) inserted into the main body, wherein the slot (19) is so arranged that is surrounds the recess of the hot side at a portion in the proximity of the gate.

**3.** A bottom insert as set forth in claim 1 or 2 **characterized in that** the slot (19) is of such a configuration that by virtue of the provision of the slot (19) the heat transfer surface area, that is to say the area perpendicularly to the flow of heat from the hot side to the cold side, is reduced in the region of the slot (19), more specifically preferably by at least 30 % and particularly preferably by at least 50 % and quite particularly preferably by at least 75 %.

**4.** A bottom insert as set forth in claim 2 or 3 **characterized in that** the slot (19) comprises a substantially peripherally extending groove in the main body, wherein the groove is of a depth which is preferably at least twice and particularly preferably at least three times as large as the width of the groove.

**5.** A bottom insert as set forth in one of claims 1 through 4 **characterized in that** the slot (19) is at least partially filled with heat-insulating material.

**6.** A bottom insert as set forth in one of claims 1 through 5 **characterized in that** the bottom insert is of a two-part configuration, more specifically with a hot part (16) which has the recess of the hot side and a cold part (15) which has the recess of the cold side.

**7.** A bottom insert as set forth in claim 6 **characterized in that** the two parts of the bottom insert (7) are separable.

**8.** A bottom insert as set forth in claim 6 or 7 **characterized in that** the hot part has an opening in opposite relationship to the recess of the hot side for receiving the cold part.

**9.** A bottom insert as set forth in one of claims 6 through 8 **characterized in that** the cold part and the hot part are sealed off relative to each other, more specifically preferably by means of O-rings (18).

**10.** A bottom insert as set forth in one of claims 6 through 9 **characterized in that** all surfaces which are provided for contact with the molding to be produced are arranged at the cold part.

**11.** A bottom insert as set forth in one of claims 6 through 10 **characterized in that** there is provided a contact surface between the hot part and the cold part, applied to at least one part, an insulating coating, an insulating membrane and/or a spacing element.

**12.** A bottom insert as set forth in one of claims 1, 3 through 11 **characterized in that** a cooling passage is provided for the feed and discharge of a cooling fluid to and from the cold side.

**13.** A bottom insert as set forth in claim 12 when appendant to one of claims 8 through 11 **characterized in that** when the cold part is fitted into the opening in the hot part, a cooling space for receiving cooling fluid remains at least portion-wise between the cold part and the hot part, wherein the cooling space is preferably in the form of part of a ring and is particularly preferably of a substantially ring-shaped configuration.

**14.** A bottom insert as set forth in claim 13 **characterized in that** the surface defining the cooling space at the cold part extends substantially parallel to the inside surface of the recess of the cold part, which surface comes into contact with the molding to be produced and/or that the cold part has reinforcing elements, preferably reinforcing ribs, in the region of the cooling space.

**Revendications**

**1.** Insert de fond pour une cavité de moule destinée à la fabrication de pièces moulées en matière plastique, comprenant un corps de base pourvu d'un côté chaud qui présente une cavité pour recevoir de la matière plastique fondue et sous pression, et d'un côté froid qui présente une cavité dont le contour intérieur est prévu pour venir au contact de la pièce moulée à produire et pour en former le contour extérieur, ainsi qu'une porte (17) qui relie la cavité du côté chaud à la cavité du côté froid et est prévue pour transférer la matière plastique fondue du côté chaud vers le côté froid, **caractérisé en ce qu'** est prévu, à l'intérieur de l'insert de fond entre le côté chaud et le côté froid de l'insert de fond, un dispositif d'isolation thermique, constitué d'une encoche (19) pratiquée dans le corps de base, l'encoche (19) étant disposée de façon à entourer la cavité du côté chaud au niveau d'une partie située à proximité de la porte et l'encoche (19) consistant en une rainure sensiblement périphérique ménagée dans le corps de base, la rainure ayant une profondeur égale à au moins le triple de la largeur de la rainure.

**2.** Insert de fond pour une cavité de moule destinée à la fabrication de pièces moulées en matière plastique, comprenant un corps de base pourvu d'un côté chaud qui présente une cavité pour recevoir de la matière plastique fondue et sous pression, et d'un côté froid qui présente une cavité dont le contour intérieur est prévu pour venir au contact de la pièce moulée à produire et pour en former le contour extérieur, ainsi qu'une porte (17) qui relie la cavité du côté chaud à la cavité du côté froid et est prévue pour transférer la matière plastique fondue du côté chaud vers le côté froid, un canal de refroidissement pour l'amenée et l'évacuation d'un fluide de refroidissement vers et à partir du côté froid étant prévu,

**caractérisé en ce qu'** est prévu, à l'intérieur de l'insert de fond entre le côté chaud et le côté froid de l'insert de fond, un dispositif d'isolation thermique, constitué d'une encoche (19) pratiquée dans le corps de base, l'encoche (19) étant disposée de façon à entourer la cavité du côté chaud au niveau d'une partie située à proximité de la porte.

**3.** Insert de fond selon la revendication 1 ou 2, **caractérisé en ce que** l'encoche (19) est pratiquée de manière à réduire la surface de passage de la chaleur, c-à-d. la surface perpendiculaire au flux thermique du côté chaud vers le côté froid, dans la région de l'encoche (19), de préférence d'au moins 30%, plus préférablement d'au moins 50% et, encore plus préférablement d'au moins 75%.

**4.** Insert de fond selon la revendication 2 ou 3, **caractérisé en ce que** l'encoche (19) consiste en une rainure sensiblement périphérique ménagée dans le corps de base, la rainure ayant une profondeur égale, de préférence, au moins au double et plus préférablement, au moins au triple de la largeur de la rainure.

**5.** Insert de fond selon l'une des revendications 1 à 4, **caractérisé en ce que** l'encoche (19) est remplie, au moins partiellement, d'un matériau thermiquement isolant.

**6.** Insert de fond selon l'une des revendications 1 à 5, **caractérisé en ce que** l'insert de fond est réalisé en deux parties, à savoir une partie chaude (16) qui présente la cavité du côté chaud, et une partie froide (15), qui présente la cavité du côté froid.

**7.** Insert de fond selon la revendication 6, **caractérisé en ce que** les deux parties de l'insert de fond peuvent être séparées.

**8.** Insert de fond selon la revendication 6 ou 7, **caractérisé en ce que** la partie chaude présente un évidement opposé à la cavité de la partie chaude et destiné à recevoir la partie froide.

**9.** Insert de fond selon l'une des revendications 6 à 8, **caractérisé en ce que** la partie froide et la partie chaude sont rendues mutuellement étanches et ce, de préférence, à l'aide de joints toriques (18).

**10.** Insert de fond selon l'une des revendications 6 à 9, **caractérisé en ce que** toutes les surfaces prévues pour être en contact avec la pièce moulée à fabriquer sont disposées au niveau de la partie froide.

**11.** Insert de fond selon l'une des revendications 6 à 10, **caractérisé en ce qu'**est prévu(e), sur la surface de contact entre la partie chaude et la partie froide, un revêtement isolant, appliqué sur au moins une partie, une membrane isolante et/ou un élément d'espacement.

**12.** Insert de fond selon l'une des revendications 1, 3 à 11, **caractérisé en ce qu'**est prévu un canal de refroidissement pour l'amenée et l'évacuation d'un fluide de refroidissement vers et à partir du côté froid.

**13.** Insert de fond selon la revendication 12, si dépendante de l'une des revendications 8 à 11, **caractérisé en ce que**, lors de l'introduction de la partie froide dans l'évidement de la partie chaude, il subsiste au moins partiellement entre la partie froide et la partie chaude un espace de refroidissement destiné à recevoir le fluide de refroidissement, l'espace de refroidissement étant réalisé, de préférence, en forme d'anneau partiel et plus préférablement de manière sensiblement annulaire.

**14.** Insert de fond selon la revendication 13, **caractérisé en ce que** la surface limitant l'espace de refroidissement au niveau de la partie froide s'étend de manière sensiblement parallèle à la surface intérieure de la cavité de la partie froide venant au contact de la pièce moulée à produire et/ou **en ce que** la partie froide présente, dans la région de l'espace de refroidissement, des éléments de renforcement, de préférence des nervures de renforcement.

Fig. 1

Fig. 2

Fig. 3

10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10024625
- DE 10037739

- JP 57024220 A